# EUROPEAN PATENT SPECIFICATION

(11) **EP 2 982 847 B1**
(45) Date of publication and mention of the grant of the patent: **14.03.2018**
(21) Application number: 15185126.8
(22) Date of filing: 08.01.2015
(51) Int. Cl.: F02C 6/12, F04D 17/10, F04D 29/42, F04D 29/44, F04D 29/68

(54) **TURBOCHARGER WITH TWIN PARALLEL COMPRESSOR IMPELLERS AND HAVING CENTER HOUSING FEATURES FOR CONDITIONING FLOW IN THE REAR IMPELLER**
TURBOLADER MIT ZWEI PARALLELEN VERDICHTERLAUFRÄDERN UND MIT ZENTRALEN GEHÄUSEMERKMALEN ZUM KONDITIONIEREN DES FLUSSES IM HINTEREN LAUFRAD
TURBOCOMPRESSEUR COMPRENANT DEUX UNITÉS DE ROUES DE COMPRESSEURS PARALLÈLES ET PRÉSENTANT DES CARACTÉRISTIQUES DE LOGEMENT CENTRALES POUR CONDITIONNER LE FLUX DANS LA ROUE ARRIÈRE

(30) Priority: 15.01.2014 US 201414156172
(43) Date of publication of application: 10.02.2016
(62) Divisional of application: 15150546.8
(73) Proprietor: Honeywell International Inc., Morris Plains, NJ 07950 (US)
(72) Inventor: LEI, Vai-Man, Morristown, NJ New Jersey 07962 (US); PLCH, Michal, Morristown, NJ New Jersey 07962 (US); RACEK, Dusan, Morristown, NJ New Jersey 07962 (US)
(74) Representative: Houghton, Mark Phillip

(56) References cited:
- EP-A1- 2 402 618
- EP-A2- 2 378 064
- EP-B1- 1 853 825
- WO-A1-2013/128539
- US-A1- 2007 113 551

## Description

### BACKGROUND OF THE INVENTION

The present invention relates to compressors for turbochargers, and more particularly to twin-impeller centrifugal (or radial) compressors and to turbochargers that include such compressors.

Radial compressors are used in various types of turbomachinery, including turbochargers for internal combustion engine systems. A radial compressor generally includes at least one compressor stage formed by a rotating impeller mounted on a shaft within a compressor housing. The housing defines an inlet flow path that typically leads into the impeller in a generally axial direction. The impeller includes a hub and a plurality of blades spaced about its circumference and extending out from the hub. The impeller is configured to receive fluid in the axial direction and to compress the fluid and discharge the fluid in a generally radially outward direction into a volute defined by the compressor housing. The housing includes a wall or shroud that extends proximate the tips of the impeller blades and, together with the hub of the impeller, defines the main flow path through the impeller.

Some compressor wheels have two impellers arranged back-to-back such that fluid enters one impeller in one axial direction and enters the other impeller in an opposite axial direction. It is a simple matter to supply air to the impeller on the outer end of the device (referred to herein as the "first" or "front" impeller), as the air comes in axially from outside the turbomachinery device (e.g., a turbocharger), via a suitable inlet conduit. The other impeller (referred to herein as the "second" or "rear" impeller), however, is typically up against other structure. For example, in a turbocharger, the rear impeller would typically be up against a bearing housing or center housing. Accordingly, air generally must be routed initially in a radially inward direction and then must be turned roughly 90 degrees to enter the rear impeller axially. Providing a reasonably uniform flow field into the rear impeller becomes a challenge. A uniform flow field is important to performance, particularly as regard the stall margin of the compressor. US Patent Application 11/285665 teaches a parallel twin-impeller compressor with back-to-back impellers mounted on the same shaft in which a portion of the compressor housing assembly defines the common diffuser as well as the second shroud for the second impeller, and in which a second inlet duct, which is separate from the center housing, conditions flow into the second impeller without the use of vanes. European patent 1 853 825 teaches a serial two-stage radial compressor, which addresses the problem of the flow discharged from the first-stage impeller which has substantial swirl that must be reduced or eliminated before the flow enters the second-stage impeller, to achieve this the patent teaches the use of vanes. The vanes are part of a deswirl ring that is separate from the center housing that houses the bearings for the shaft. European patent application 1074591.0 teaches a suction casing which guides a fluid which is introduced in a radial direction so that it flows in an axial direction towards an annular shaped opening using a doughnut shaped space and partitioning blades.

### BRIEF SUMMARY OF THE DISCLOSURE

The present disclosure deals generally with flow-conditioning into the rear impeller of a parallel twin-impeller compressor for a turbocharger, such as for improving stall margin of the compressor. More particularly, the present disclosure describes such flow-conditioning accomplished by structures that are defined at least in part, and in some cases wholly, by the center housing of the turbocharger.

The invention in its various aspects is as set out in the appended claims.

In one embodiment described herein, a turbocharger comprises a turbine mounted on a rotatable shaft for rotation about an axis of the shaft, and a radial compressor comprising a compressor wheel mounted on the shaft and disposed within a compressor housing, the compressor wheel comprising a first impeller and a second impeller each having a hub and a plurality of compressor blades extending from the hub, a back side of the first impeller being adjacent a back side of the second impeller such that the impellers are in a back-to-back arrangement and air enters the impellers in oppositely directed axial directions. The compressor housing defines an inlet to the first impeller and defines a common volute that receives pressurized fluid from the first and second impellers via a common diffuser leading from the impellers into the volute. The compressor housing defines a first shroud that is adjacent the tips of the blades of the first impeller, and there is a second shroud adjacent the tips of the blades of the second impeller.

The turbocharger includes a center housing mounted between the compressor housing and the turbine housing and containing bearings for the shaft, the center housing defining an inlet flow path for the second impeller.

The center housing defines inlet guide vanes disposed within the inlet flow path for the second impeller for conditioning flow into the second impeller.

In one embodiment, the inlet flow path for the second impeller extends substantially 360 degrees about the axis, and the compressor housing defines an entrance passage into the inlet flow path for the second impeller, the entrance passage extending along a generally radial direction into the inlet flow path for the second impeller.

In a particular embodiment, some of the inlet guide vanes have configuration differences relative to others of the inlet guide vanes. The configuration differences can include setting angle differences and/or differences in vane length along a direction of flow in the inlet flow path to the second impeller and/or differences in camber of the vanes.

In the embodiments described herein, the "center housing," which houses the bearings and also defines the bleed flow passage and/or the inlet guide vanes, is a one-piece integrally formed structure (as opposed to an assembly of separately formed parts one of which houses the bearings and another of which defines the bleed flow passage and/or the inlet guide vanes).

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a cross-sectional view of a turbocharger in accordance with one illustrative example;
FIG. 2 is a cross-sectional view of a portion of the turbocharger of FIG. 1;
FIG. 3 is a cross-sectional view of the portion shown in FIG. 2, but on a different plane from FIG. 2;
FIG. 4 is an exploded perspective view of an assembly including a center housing and a shroud ring as used in the turbocharger of FIG. 1;

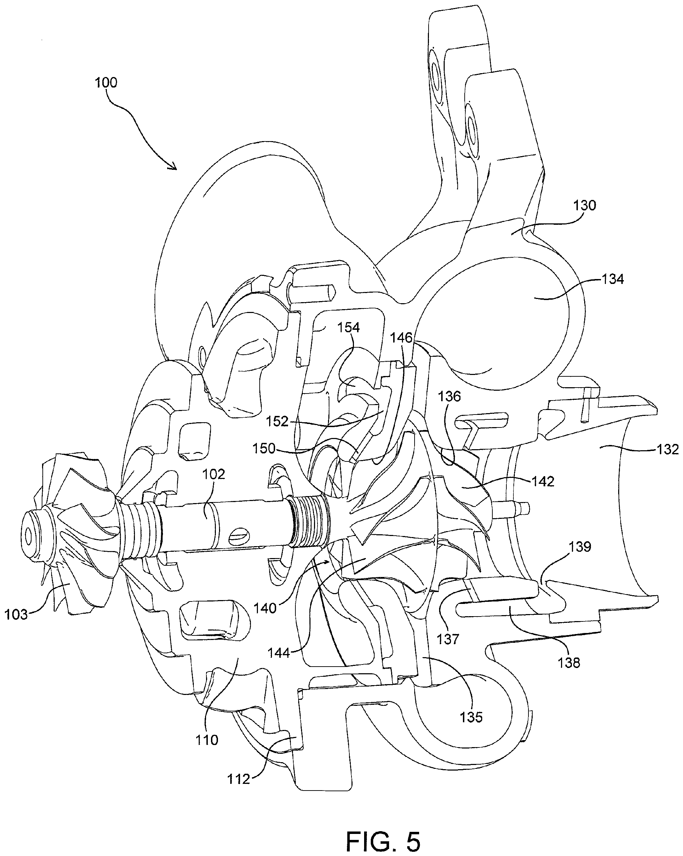

FIG. 5 is an axially sectioned perspective view of the turbocharger of FIG. 1;
FIG. 6 is a perspective view, partly sectioned, of a turbocharger in accordance with one embodiment of the invention;
FIG. 7 is an axial cross-sectional view of the turbocharger of FIG. 6;
FIG. 8 is a perspective view of a center housing, partly sectioned, used in the turbocharger of FIG. 6;
FIG. 9 is a perspective view of the center housing of FIG. 8, sectioned to show details of the inlet guide vanes;
FIG. 10 is an end view of the sectioned center housing of FIG. 9; and
FIG. 11 is a perspective view of the center housing of FIG. 8.

### DETAILED DESCRIPTION OF THE DRAWINGS

The present inventions now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

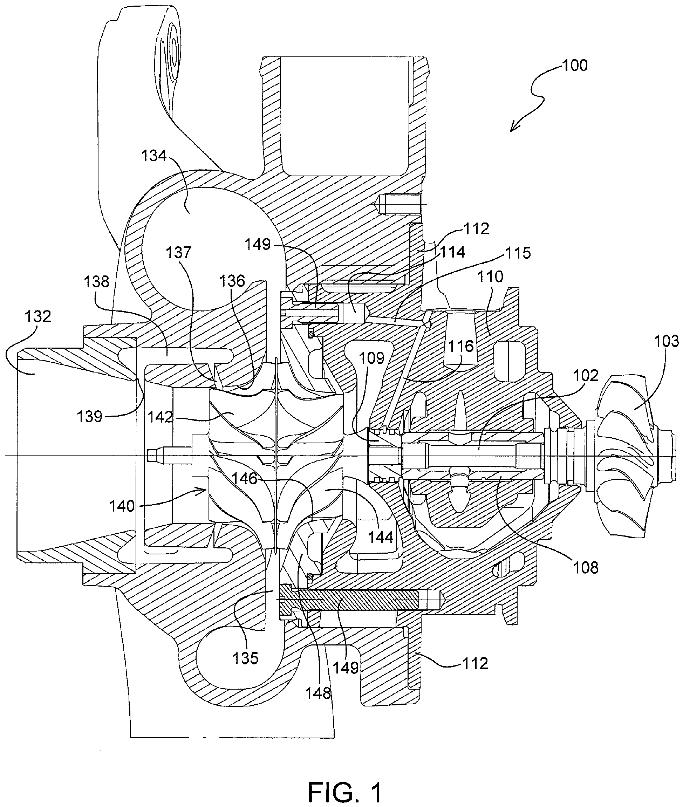

FIG. 1 shows a turbocharger **100** having a twin-impeller compressor, in accordance with one example that does not form part of the invention. The turbocharger **100** includes a rotary shaft **102** on one end of which a turbine wheel **103** is mounted. The turbine section of the turbocharger **100** includes a turbine housing (not shown) that defines a turbine volute arranged to direct fluid to the turbine wheel **103.** Exhaust gases from an engine (not shown) are fed into the turbine volute and the gases then pass through the turbine wheel **103** and are expanded so that the turbine wheel **103** is rotatably driven, thus rotatably driving the shaft **102.** The expanded gases are discharged from the turbine housing. The turbine can be a radial turbine in which the flow enters the turbine in a generally radially inward direction; however, the invention is not limited to any particular turbine arrangement. Furthermore, the turbocharger could include means other than a turbine for driving the shaft **102,** such as an electric motor.

The shaft **102** passes through a center housing **110** of the turbocharger. The center housing connects the turbine housing with a compressor housing **130** of the turbocharger as further described below. The center housing contains bearings **108** for the shaft **102.** The compressor housing **130** is affixed to the center housing **110** in suitable fashion, such as with threaded fasteners (not shown) or the like. Preferably the center housing is a one-piece integrally formed structure.

Mounted on an opposite end of the shaft **102** from the turbine wheel **103** is a compressor wheel **140** comprising a first impeller **142** and a second impeller **144.** Surrounding the compressor wheel is the compressor housing **130.** A forward portion of the compressor housing defines a compressor inlet **132** leading into the first impeller **142.**

The first impeller **142** and second impeller **144** are mounted back-to-back; that is, the downstream side of the first impeller **142** is nearer the turbine than is the upstream side of the impeller, while the downstream side of the second impeller **144** is farther from the turbine than is the upstream side of the impeller. Air enters the inlet **132** axially and goes straight into the first impeller **142.** With respect to the second impeller **144,** however, air must enter it in an opposite axial direction because of the back-to-back arrangement of the two impellers. Accordingly, as further described below, the air must be routed from outside the turbocharger in a generally radially inward direction toward the axis of the turbocharger, and then must be turned approximately 90 degrees to flow axially into the second impeller **144.** The arrangement for accomplishing this in an advantageous fashion is one of the key features of the present disclosure.

Before describing the second impeller in detail, however, the compressor housing **130** is described. A common scroll or volute **134** is defined by the compressor housing. Air pressurized by the two impellers **142, 144** is discharged from the impellers in a generally radially outward direction (although of course the flow has a significant circumferential or swirl component of velocity imparted by the compressor wheel) into a common diffuser **135,** and the air flows outward through the diffuser and is diffused (i.e., its velocity drops and its static pressure rises) and is discharged into the common volute **134.** The compressor housing defines a discharge conduit (not visible in FIG. 1) for discharging pressurized air from the volute **134** for supply to the intake of the internal combustion engine.

The compressor housing includes a first shroud **136** that extends circumferentially about the first impeller **142** closely adjacent to the tips of the blades of the impeller; the main flow path through the first impeller is defined between the first shroud and the hub of the impeller. The first shroud optionally can include flow recirculation features such as a bleed port **137** located adjacent the first impeller **142,** a recirculation flow passage **138,** and a bleed flow injection port **139** spaced upstream of the first impeller for allowing recirculation of flow for aiding stall margin of the compressor. In the illustrated example, the inlet **132** to the first impeller is defined by a generally ring-shaped part that is separate from the rest of the compressor housing **130,** and the injection port **139** is defined between this ring-shaped part and the first shroud **136** defined by the compressor housing. Alternatively, however, the inlet **132** could be integral with the rest of the compressor housing.

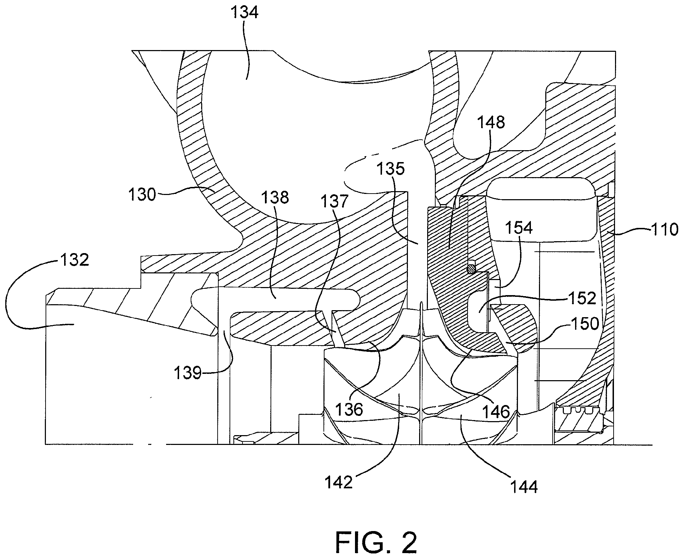

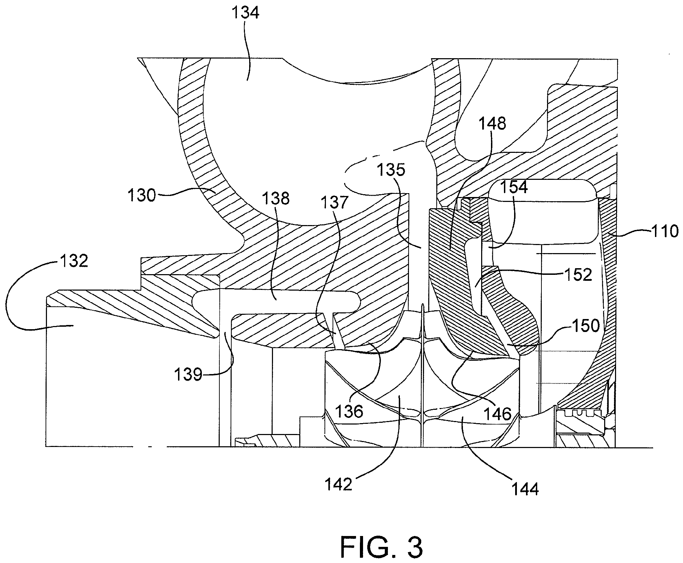

Turning now to the second impeller **144** and associate features, with primary reference to FIGS. 2 and 3, a second shroud **146** for the second impeller is defined at least in part by a shroud ring **148** that is separate from the compressor housing **130** and the center housing **110.** The shroud ring **148** is mounted between the center housing **110** and the compressor housing **130,** and is fastened to the center housing by fasteners **149** (FIGS. land 4). In the illustrated example, the shroud ring defines part of the second shroud **146** and the center housing **110** defines the remainder of the second shroud. The common diffuser **135** is formed between a wall of the compressor housing **130** and a wall of the shroud ring **148.** It will also be noted from FIG. 1 that the compressor housing **130** defines a space or receptacle into which a partial assembly (comprising the shaft **102** and compressor wheel **140,** the shroud ring **148,** and the center housing **110**) is received, in a right-to-left direction in FIG. 1, until an outer flange portion **112** of the center housing abuts an annular surface defined by the compressor housing. The abutment of the flange portion **112** with the annular surface on the compressor housing ensures that the shroud ring **148** is properly located in an axial sense with respect to the compressor housing (so that, for example, the compressor wheel **140** has the correct axial position with respect to the first shroud **136** and so that the diffuser **135** has the intended axial width dimension). Additionally, the annular surface abutted by the center housing flange portion **112** is surrounded by a step that locates the flange portion **112** properly in a radial sense (so that, for example, the compressor wheel **140** has the correct radial position with respect to the first shroud **136**).

In accordance with this illustrative example, the second shroud **146** defines at least one bleed port **150** therethrough and the center housing **110** at least partially defines a bleed flow passage **152** leading from the at least one bleed port into the inlet flow path for the second impeller **144** at a position upstream of the at least one bleed port **150** such that fluid can pass in either direction between the inlet flow path and the second impeller via the at least one bleed port **150** and the bleed flow passage **152.**

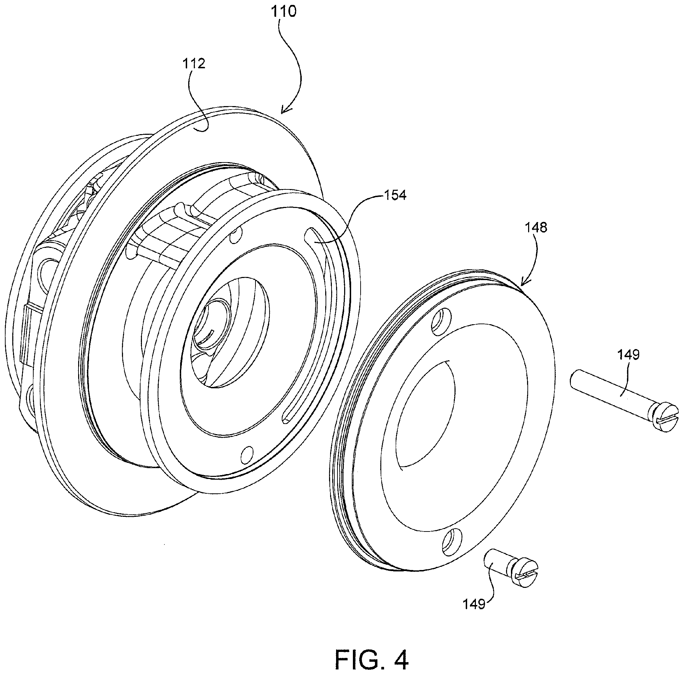

In the illustrative example,
the at least one bleed port **150** is formed by a generally annular space defined between the shroud ring **148** and the center housing **110.** This generally annular space partially defines the bleed flow passage **152.** Additionally, the center housing defines a part of the bleed flow passage **152** that leads from the generally annular space into the inlet flow path for the second impeller. More particularly, this part of the bleed flow passage comprises an opening **154** defined in the center housing **110.** The opening **154** in the illustrated embodiment is an elongate circumferentially extending opening, as best seen in FIG. 4.

The upstream portion of an impeller that the fluid first encounters is often referred to as the inducer of the impeller. When the flow rate through the compressor is reduced while maintaining pressure ratio at a relatively high level, at some point the surge line of the compressor map is encountered. Surging at relatively high pressure ratios typically occurs because of stalling of the inducer of one or both impellers, wherein the flow at the blade tips of the inducer begins locally to recirculate, thereby reducing the effective flow area of the inducer. In contrast, below a certain pressure ratio, surging typically is the result of stalling of the diffuser. The surge line of many compressors has a kink or "knee" above which surging is caused by inducer stall, and below which surging is caused by diffuser stall.

The current example particularly addresses surging above the knee caused by inducer stall. In accordance with the invention, the ported second shroud **146** is employed in order to delay the onset of inducer stall of the second impeller **144** to higher pressure ratios at flow (or, stated differently, to lower flows at pressure ratio). Thus, fluid entering the inducer of the second impeller **144** near the blade tips potentially can enter the bleed port **150** and flow generally radially outwardly through the bleed flow passage **152** and exit through the opening **154** into the inlet flow path for the second impeller. Fluid can also pass in the reverse direction from the inlet flow path through the opening **154** into the bleed flow passage **152** and through the port **150** into the inducer of the second impeller. The direction of flow depends on the sense of the pressure gradient between the inducer location and the upstream inlet flow path location.

At higher pressure ratios, where inducer stall of the second impeller **144** would ordinarily begin to occur, the ported second shroud (in comparison with an otherwise identical non-ported shroud) can delay the onset of surge. It is believed that at near-surge conditions the ported shroud allows fluid to pass into the bleed flow passage **152** and through the opening **154** back into the inlet flow path, and thereby prevents or reduces the local flow recirculation in the inducer tip region that normally attends inducer stall and surge.

As previously described in connection with FIG. 1, the compressor in accordance with the current example can also include a ported first shroud **136.** Alternatively, the compressor can have a non-ported first shroud.

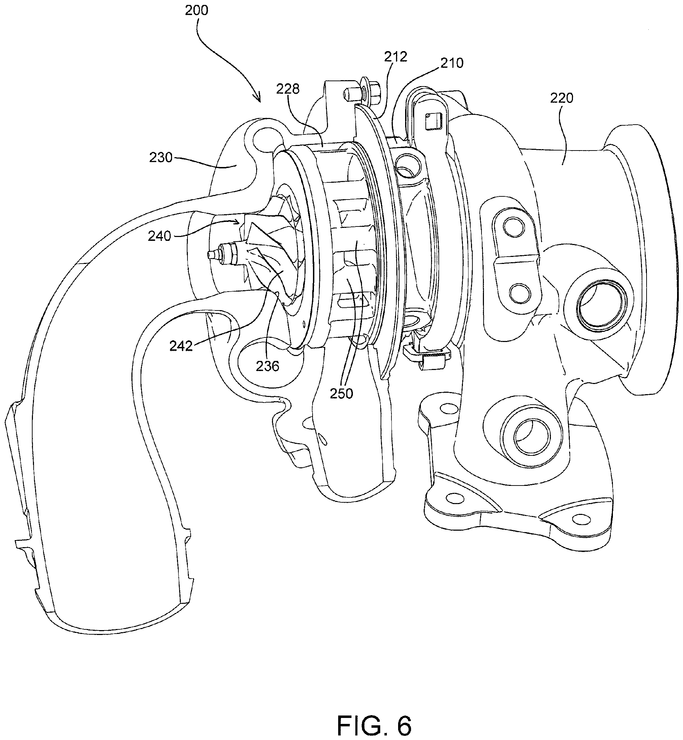

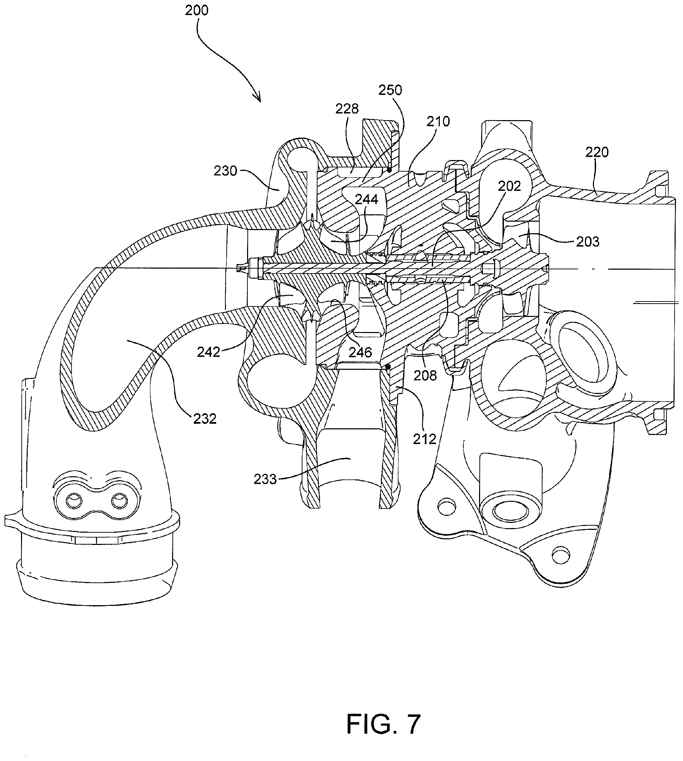

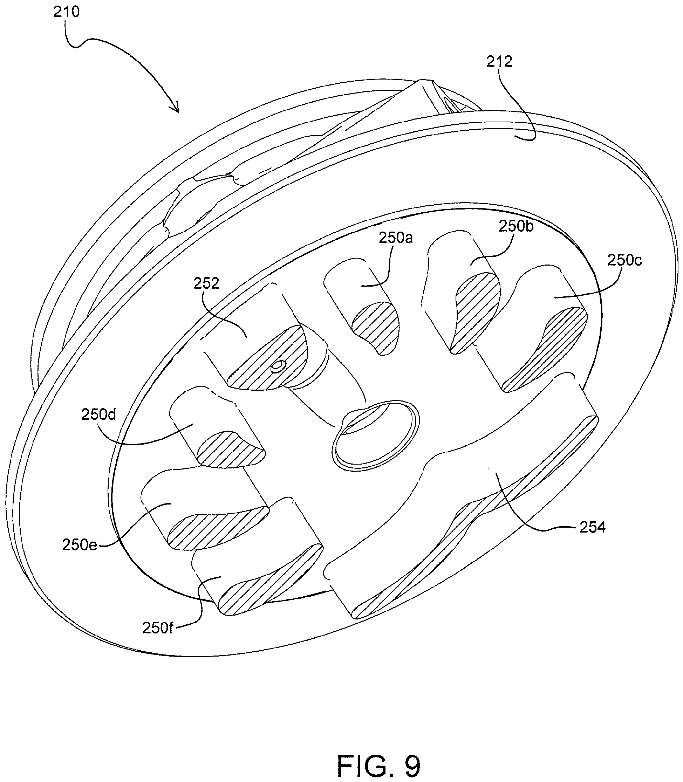

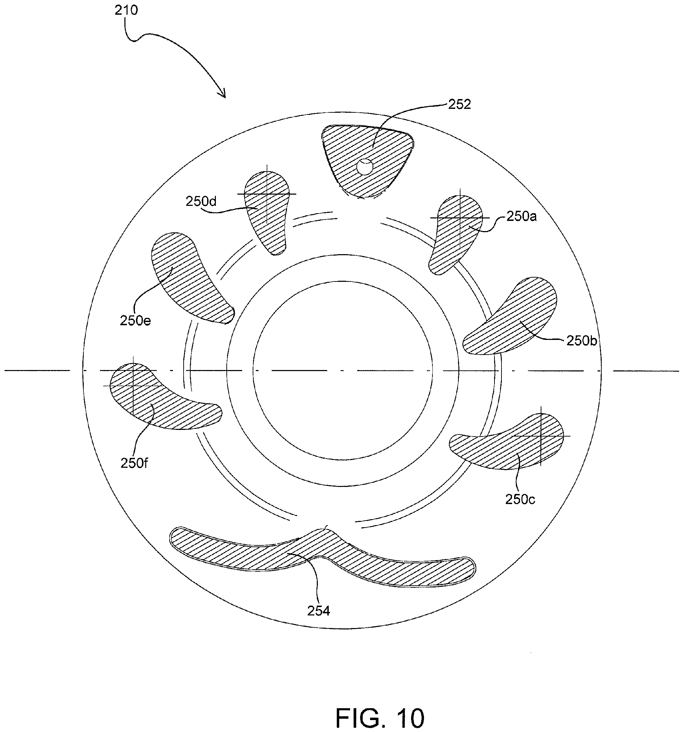

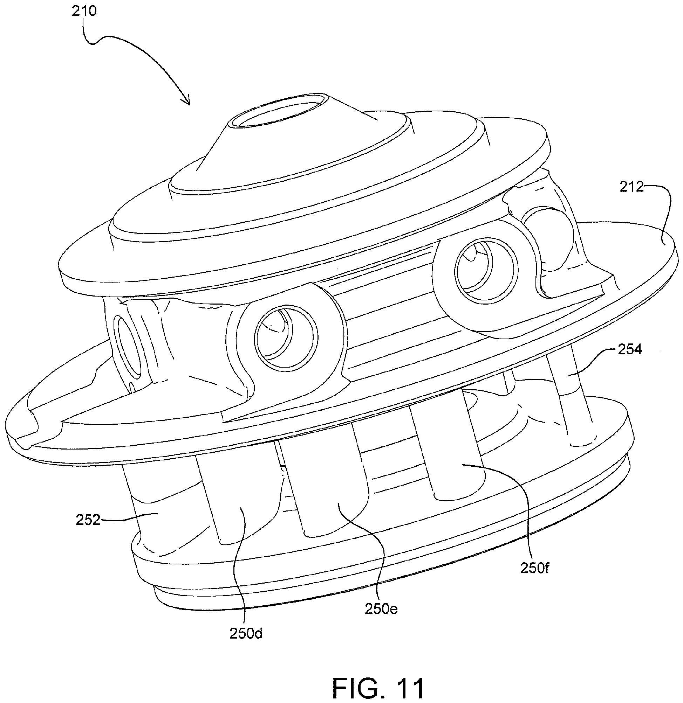

Referring to FIG. 1, one of the fasteners **149** for the shroud ring **148** has a through bore that communicates with the hole **114** in the shroud ring into which the fastener is received. The center housing **110** additionally defines a passage **115** that communicates with the hole **114,** and a passage **116** that communicates with the passage **115** and extends into the bore of the center housing in which a seal **109** for the rotor shaft **102** is located. In this manner, pressurized air from the diffuser **135** is communicated via the hole **114** and the passages **115, 116** to the seal **109** for pressurizing the seal. One embodiment of the invention is illustrated in FIGS. 6 through 11. The turbocharger **200** depicted in FIGS. 6 and 7 is similar in many respects to the turbocharger **100** described above, differing primarily in terms of the structure and arrangement of the center housing **210** and compressor housing **230.** The turbocharger **200** includes a turbine wheel **203** mounted on one end of a shaft **202,** and a compressor wheel **240** mounted on the other end of the shaft **202.** The shaft is supported in bearings **208** mounted within the center housing **210.** The turbine wheel **203** is contained within a turbine housing **220,** which is affixed to the center housing **210** such as by the illustrated V-band shown in FIG. 7. The compressor wheel **240** is contained with the compressor housing **230.** The compressor wheel is a twin-impeller wheel having a first impeller **242** and a second impeller **244** mounted back-to-back. Flow enters the first impeller **242** via a first inlet conduit **232,** which leads the flow axially into the first impeller. Flow enters the second impeller **244** via a second inlet conduit **233,** which leads the flow radially inwardly into an annular space **228** that surrounds a portion of the center housing **110.** This portion of the center housing defines the inlet flow path for the second impeller **244.** The fluid is distributed around the annular space **228** and flows generally radially inwardly through the inlet flow path and is then turned approximately 90 degrees to enter the second impeller **244** in a generally axial direction.

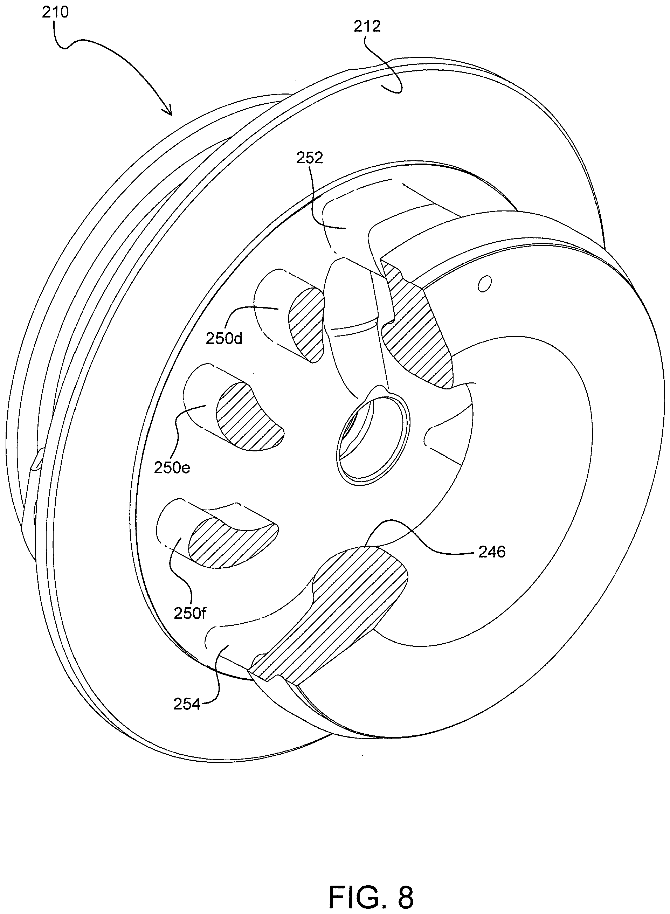

In accordance with the second embodiment of the invention, and with primary reference to FIGS. 8-11, the center housing **210** is an integral one-piece structure that includes a portion defining a second shroud **246** for the second impeller **244** and also defining one wall of a common diffuser **235** (FIG. 7) for the compressor wheel. The center housing **210** also defines inlet guide vanes **250** in the inlet flow path for the second impeller **244.** Flow entering through the inlet conduit **233** (FIG. 7) first encounters a wedge-shaped member **252,** which splits the flow into two portions, one of which proceeds generally clockwise through the annular space **228** and the other of which proceeds generally counterclockwise through the annular space **228,** whereupon these two flows encounter the inlet guide vanes **250.** Referring particularly to FIG. 8, the clockwise flow encounters inlet guide vanes **250a, 250b,** and **250c.** In the illustrated embodiment, these inlet guide vanes are not identical in configuration. Specifically, the inlet guide vanes **250a-250c** differ in setting angle with respect to the radial direction and also differ in length in the flow direction as well as the amount of camber of the vanes. The inlet guide vanes **250d-250f** for the counterclockwise flow portion are arranged in mirror image to the inlet guide vanes **250a-250c.** Diametrically opposite from the wedge-shaped member **252** is a bird wing-shaped member **254** that also serves to help guide the flow into the second impeller. Detailed flow studies, such as CFD (computational fluid dynamics), can be used for tailoring the configurations of the inlet guide vanes **250** and the members **252** and **254.**

It will be noted from FIG. 7 that the compressor housing **230** defines a space or receptacle into which a partial assembly (comprising the shaft **202** and compressor wheel **240,** and the center housing **210**) is received, in a right-to-left direction in FIG. 7, until an outer flange portion **212** of the center housing abuts an annular surface defined by the compressor housing. The abutment of the flange portion **212** with the annular surface on the compressor housing ensures that the portion of the center housing defining the second shroud **246** is properly located in an axial sense with respect to the compressor housing (and so that, for example, the compressor wheel **240** has the correct axial position with respect to the first shroud **236** and so that the diffuser **235** has the intended axial width dimension). Additionally, the annular surface abutted by the center housing flange portion **212** is surrounded by a step that locates the flange portion **212** properly in a radial sense (so that, for example, the compressor wheel **240** has the correct radial position with respect to the first shroud **236**).

The inlet guide vanes **250** of the second embodiment are configured to condition the flow that enters the second impeller **244**. In particular, the inlet guide vanes are configured to alter or regulate the direction of the flow in order to improve the uniformity of the flow around the circumference. More-uniform flow generally leads to greater stability of the compressor and improved surge margin.

Many modifications and other embodiments of the inventions set forth herein will come to mind to one skilled in the art to which these inventions pertain having the benefit of the teachings presented in the foregoing descriptions and the associated drawings, if within the scope of the appended claims. Although specific terms are employed herein, they are used in a generic and descriptive sense only and not for purposes of limitation.

## Claims

1. A turbocharger (200), comprising:
a turbine wheel (203) mounted on a rotatable shaft (102) for rotation about an axis of the shaft;
a radial compressor comprising a compressor wheel (240) mounted on the shaft and disposed within a compressor housing (230), the compressor wheel comprising a first impeller (242) and a second impeller (244) each having a hub and a plurality of compressor blades extending from the hub, a back side of the first impeller being adjacent a back side of the second impeller such that the impellers are in a back-to-back arrangement and air enters the impellers in oppositely directed axial directions, the compressor housing defining an inlet to the first impeller and defining a common volute that receives pressurized fluid from the first and second impellers via a common diffuser (235) leading from the impellers into the volute, the compressor housing defining a first shroud (236) that is adjacent tips of the blades of the first impeller, and wherein a second shroud (246) is adjacent tips of the blades of the second impeller; and
a center housing (210) mounted between the compressor housing and the turbine housing and containing bearings for the shaft, the center housing defining an inlet flow path for the second impeller; **characterized in that** the center housing is an integral one-piece structure that includes a portion defining the second shroud for the second impeller and also defining one wall of the common diffuser, wherein the center housing further defines inlet guide vanes (250a, 250b, 250c, 250d, 250e, 250f) disposed within the inlet flow path for the second impeller for conditioning flow into the second impeller.

2. The turbocharger of claim 1, wherein the inlet flow path for the second impeller extends substantially 360 degrees about the axis, and the compressor housing defines an entrance passage (233) into the inlet flow path for the second impeller, the entrance passage extending along a generally radial direction into the inlet flow path for the second impeller.

3. The turbocharger of claim 2, wherein some of the inlet guide vanes (250a, 250b, 250c, 250d, 250e, 250f) have configuration differences relative to others of the inlet guide vanes.

4. The turbocharger of claim 3, wherein the configuration differences include setting angle differences.

5. The turbocharger of claim 3, wherein the configuration differences include differences in length along a direction of flow in the inlet flow path to the second impeller.

## Patentansprüche

1. Turbolader (200), umfassend:
ein Turbinenrad (203), das auf einer drehbaren Welle (102) montiert ist, um eine Drehung um eine Achse der Welle zu ermöglichen;
einen Radialverdichter, der ein Verdichterrad (240) umfasst, das auf der Welle montiert ist und sich innerhalb eines Verdichtergehäuses (230) befindet, wobei das Verdichterrad ein erstes Laufrad (242) und ein zweites Laufrad (244) umfasst, die jeweils eine Nabe und mehrere Verdichterschaufeln aufweisen, die sich von der Nabe aus erstrecken, wobei eine Rückseite des ersten Laufrads an eine Rückseite des zweiten Laufrads so angrenzt, dass die Laufräder Rücken an Rücken angeordnet sind und dass Luft in entgegengesetzt ausgerichteten axialen Richtungen in die Laufräder eintritt, wobei das Verdichtergehäuse einen Einlass zum ersten Laufrad sowie ein gemeinsames Spiralgehäuse definiert, das druckbeaufschlagtes Fluid von den ersten und zweiten Laufrädern über einen gemeinsamen Diffusor (235) erhält, der von den Laufrädern in das Spiralgehäuse führt, wobei das Verdichtergehäuse ein erstes Deckband (236) definiert, das an Spitzen der Schaufeln des ersten Laufrads angrenzt, und wobei ein zweites Deckband (246) an Spitzen der Schaufeln des zweiten Laufrads angrenzt; und
ein zentrales Gehäuse (210), das zwischen dem Verdichtergehäuse und dem Turbinengehäuse montiert ist und Lager für die Welle enthält, wobei das zentrale Gehäuse einen Einlassflussweg für das zweite Laufrad definiert;
**dadurch gekennzeichnet, dass**
das zentrale Gehäuse eine integrale einteilige Konstruktion ist, die einen Abschnitt beinhaltet, der das zweite Deckband für das zweite Laufrad definiert sowie auch eine Wand des gemeinsamen Diffusors definiert, wobei das zentrale Gehäuse weiterhin Eintrittsleitschaufeln (250a, 250b, 250c, 250d, 250e, 250f) definiert, die sich innerhalb des Einlassflussweges für das zweite Laufrad zum Konditionieren des Flusses in das zweite Laufrad befinden.

2. Turbolader nach Anspruch 1, wobei der Einlassflussweg für das zweite Laufrad im Wesentlichen 360 Grad um die Achse verläuft, und wobei das Verdichtergehäuse einen Eintrittsdurchgang (233) in den Einlassflussweg für das zweite Laufrad definiert, wobei sich der Eintrittsdurchgang entlang einer allgemein radialen Richtung in den Einlassflussweg für das zweite Laufrad erstreckt.

3. Turbolader nach Anspruch 2, wobei einige der Eintrittsleitschaufeln (250a, 250b, 250c, 250d, 250e, 250f) im Verhältnis zu anderen der Eintrittsleitschaufeln Konfigurationsunterschiede aufweisen.

4. Turbolader nach Anspruch 3, wobei die Konfigurationsunterschiede Anstellwinkelunterschiede beinhalten.

5. Turbolader nach Anspruch 3, wobei die Konfigurationsunterschiede Unterschiede in der Länge entlang einer Flussrichtung im Einlassflussweg zum zweiten Laufrad aufweisen.

## Revendications

1. Turbocompresseur (200), comprenant :
une roue de turbine (203) montée sur un arbre rotatif (102) de manière à pouvoir tourner autour d'un axe de l'arbre ;
un compresseur radial comprenant une roue de compresseur (240) montée sur l'arbre et disposée à l'intérieur d'un boîtier de compresseur (230), la roue de compresseur comprenant un premier impulseur (242) et un deuxième impulseur (244) ayant chacun un moyeu et une pluralité de pales de compresseur s'étendant depuis le moyeu, un côté arrière du premier impulseur étant adjacent à un côté arrière du deuxième impulseur de telle sorte que les impulseurs soient disposés suivant un agencement dos à dos et que de l'air pénètre dans les impulseurs dans des directions axiales orientées à l'opposé l'une de l'autre, le boîtier de compresseur définissant une entrée dans le premier impulseur et définissant une volute commune qui reçoit du fluide sous pression provenant du premier et du deuxième impulseur par le biais d'un diffuseur commun (235) conduisant depuis les impulseurs jusque dans la volute, le boîtier de compresseur définissant une première virole (236) qui est adjacente à des pointes des pales du premier impulseur, et une deuxième virole (246) étant adjacente à des pointes des pales du deuxième impulseur ; et
un boîtier central (210) monté entre le boîtier de compresseur et le boîtier de turbine et contenant des paliers pour l'arbre, le boîtier central définissant un chemin d'écoulement d'entrée pour le deuxième impulseur ;
**caractérisé en ce que**
le boîtier central est une structure intégrale d'une seule pièce qui comporte une partie définissant la deuxième virole pour le deuxième impulseur et définissant également une paroi du diffuseur commun, le boîtier central définissant en outre des ailettes de guidage d'entrée (250a, 250b, 250c, 250d, 250e, 250f) disposées à l'intérieur du chemin d'écoulement d'entrée pour le deuxième impulseur afin de conditionner l'écoulement dans le deuxième impulseur.

2. Turbocompresseur selon la revendication 1, dans lequel le chemin d'écoulement d'entrée pour le deuxième impulseur s'étend sensiblement sur 360 degrés autour de l'axe, et le boîtier de compresseur définit un passage d'entrée (233) dans le chemin d'écoulement d'entrée pour le deuxième impulseur, le passage d'entrée s'étendant le long d'une direction généralement radiale jusque dans le chemin d'écoulement d'entrée pour le deuxième impulseur.

3. Turbocompresseur selon la revendication 2, dans lequel certaines des ailettes de guidage d'entrée (250a, 250b, 250c, 250d, 250e, 250f) ont des différences de configuration par rapport à d'autres des ailettes de guidage d'entrée.

4. Turbocompresseur selon la revendication 3, dans lequel les différences de configuration comportent des différences d'angle d'attaque.

5. Turbocompresseur selon la revendication 3, dans lequel les différences de configuration comportent des différences de longueur le long d'une direction d'écoulement dans le chemin d'écoulement d'entrée jusqu'au deuxième impulseur.
